# EUROPEAN PATENT APPLICATION

(11) **EP 2 455 803 A1**
(43) Date of publication of application: **23.05.2012**
(21) Application number: 10799660.5
(22) Date of filing: 08.03.2010
(51) Int. Cl.: G02F 1/1343, G02F 1/1337

(54) **LIQUID CRYSTAL DISPLAY DEVICE**

(30) Priority: 13.07.2009 JP 2009164984; 13.01.2010 JP 2010005110
(71) Applicant: Sharp Kabushiki Kaisha, Osaka-shi, Osaka 545-8522 (JP)
(72) Inventor: SAKURAI, Takehisa, Osaka-shi, Osaka 545-8522 (JP); MURATA, Mitsuhiro, Osaka-shi, Osaka 545-8522 (JP); ISHIHARA, Shoichi, Osaka-shi, Osaka 545-8522 (JP); KOZAKI, Shuichi, Osaka-shi, Osaka 545-8522 (JP); NAKAMURA, Masako, Osaka-shi, Osaka 545-8522 (JP); OHTAKE, Tadashi, Osaka-shi, Osaka 545-8522 (JP)
(74) Representative: Hoffmann, Jörg Peter
(86) International application number: PCT/JP2010/053812
(87) International publication number: WO 2011/007598

(57) **Abstract**

The present invention provides a liquid crystal display device providing uniform display without lowering the transmissivity.

The present invention is a liquid crystal display device comprising: a first substrate and a second substrate positioned to face the first substrate; and a liquid crystal layer interposed between the first substrate and the second substrate, wherein the liquid crystal layer contains liquid crystal molecules having positive dielectric anisotropy, the liquid crystal molecule is aligned in a direction vertical to a surface of the first substrate when voltage is not applied, the first substrate comprises a pixel electrode and a common electrode, each comprising a core portion and a comb-tooth portion, the comb-tooth portions of the pixel electrode and of the common electrode are arranged in parallel with each other and alternately engaged at a constant interval, the core portion of the common electrode comprises two parallel portions that are in parallel with the longitudinal direction of the comb-tooth portion of the common electrode, the two parallel portions are each positioned outside the outermost comb-tooth portions of the pixel electrode, and (W - S) / (L + S) satisfies "2n + 1", in which "W" represents a distance between the two parallel portions, "L" represents the width of each of the comb-tooth portions of the pixel electrode and the common electrode, "S" represents a distance between a comb-tooth portion of the pixel electrode and an adjacent comb-tooth portion of the common electrode and also represents a distance between one of the outermost comb-tooth portions of the pixel electrode and one of the two parallel portions, and "n" represents the number of the comb-tooth portions of the common electrode.

## Description

### TECHNICAL FIELD

The present invention relates to a liquid crystal display device. More specifically, the present invention relates to a liquid crystal display device in which initial alignment of liquid crystal molecules is vertical alignment and the liquid crystal molecules are controlled by an electric field (e.g. transverse electric field) generated.

### BACKGROUND ART

Liquid crystal display devices have advantageous features, such as thin profile, light weight, and low power consumption, which allow their wide use in various fields. The display performance thereof has been significantly improved for years and now almost beats the display performance of CRT (cathode ray tube).

The alignment of liquid crystals in the cell determines the display mode of a liquid crystal display device. Conventional display modes of liquid crystal display devices include TN (Twisted Nematic) mode, MVA (Multi-domain Vertical Alignment) mode, IPS (In-plane Switching) mode, and OCB (Optically self-Compensated Birefringence) mode.

Among these, the IPS mode is a display mode in which a picture element electrode (liquid crystal-driving electrode) and a counter electrode (common electrode) are positioned along the same direction and an electric field generated therebetween controls driving of displays (see Patent Documents 1 and 2). The IPS mode characteristically has a wide view angle due to the alignment direction of liquid crystal molecules varied in the plane.

Patent Document 1 discloses an embodiment in which a picture element electrode is positioned at the midpoint between two counter electrodes so that the picture element electrode and the counter electrodes are substantially equally spaced. Patent Document 2 discloses an embodiment in which a combination of two or more kinds of distances between electrodes are employed, not an embodiment in which intervals between a liquid crystal driving electrode and a counter electrode are all equal to each other in a pixel.

[Patent Document 1]
   Japanese Kokai Publication No. H-09-230380 (JP-A 09-230380)
[Patent Document 2]
   Japanese Kokai Publication No. H-10-62802 (JP-A 10-62802)

### DISCLOSURE OF INVENTION

### PROBLEMS TO BE SOLVED BY THE INVENTION

Recently, as a display mode different from the IPS mode, there has been proposed a display mode in which nematic liquid crystals having positive dielectric anisotropy are used as a liquid crystal material and are vertically aligned to maintain high-contrast display, and a pair of electrodes comprising a comb-tooth structure generate a transverse electric field to control the alignment of liquid crystal molecules. In the following, the process to arrive at the present invention is described by exemplifying the above mode. However, the present invention is not limited to the above mode.

According to the above mode, liquid crystal molecules are aligned in a bend alignment in a transverse direction and the director profile forms an arch along the transverse electric field. Therefore, even from a direction oblique to the display surface, it is possible to enjoy the display quality similar to the quality enjoyable from the front direction. Accordingly, it is possible to solve a problem that the voltage-transmissivity characteristics (V-T characteristics) may change in accordance with the viewing angle because the optical birefringence is different between the front direction and the oblique direction due to stick-shaped liquid crystal molecules as in the VA mode.

-However, in the above mode, designing of the comb teeth of the pair of electrodes may have caused non-uniform display or unstable visual performances varied depending on a viewing angle.

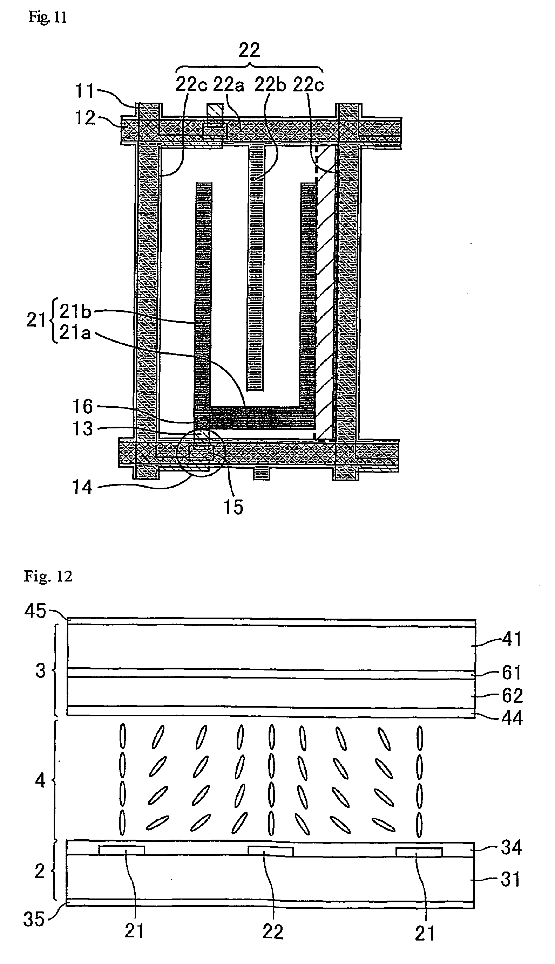

Fig. 11 is a schematic plan view of a picture element in a liquid crystal display device in which intervals between comb teeth of a pair of electrodes are different from one region to the next. As illustrated in Fig. 11, the distance between a comb tooth protruding inwardly of the picture element from the linear electrode constituting the upper side of the picture element and a comb tooth protruding inwardly of the picture element from the linear electrode constituting the lower side of the picture element varies from one place to the next. In such a case, the hatched region in Fig. 11 may cause non-uniform display. Shading of the region causing non-uniform display may be considered as a means to solve the problem of non-uniform display. However, this may bring another problem of decrease in the effective aperture ratio.

The present invention has been devised in consideration of such a state of the art and is aimed to provide a liquid crystal display device providing uniform display without lowering the transmissivity.

### MEANS FOR SOLVING THE PROBLEMS

The present inventors have made intensive studies on liquid crystal display devices in which a pair of electrodes comprising a comb-tooth structure are used in a liquid crystal layer that contains nematic liquid crystals having positive dielectric anisotropy and being initially tilt in a vertical direction. Then, the present inventors focused on a pattern of the comb teeth of the pair of electrodes to find out that uniform display are achieved without lowering the transmissivity when (W - S) / (L + S) satisfies "2n + 1" in which "W" represents the aperture width of the picture element, "L" represents a width of a comb tooth, "S" represents a distance between the comb teeth, "n" represents the number of comb teeth of the electrode having a smaller number of comb teeth compared to the other electrode. As above, the problem has been solved and the present inventors have completed the present invention.

Namely, the present invention provides a liquid crystal display device comprising: a first substrate and a second substrate positioned to face the first substrate; and a liquid crystal layer interposed between the first substrate and the second substrate, wherein the liquid crystal layer contains liquid crystal molecules having positive dielectric anisotropy, the liquid crystal molecule is aligned in a direction vertical to a surface of the first substrate when voltage is not applied, the first substrate comprises a pixel electrode and a common electrode, each comprising a core portion and a comb-tooth portion, the comb-tooth portions of the pixel electrode and of the common electrode are arranged in parallel with each other and alternately engaged at a constant interval, the core portion of the common electrode comprises two parallel portions that are in parallel with the longitudinal direction of the comb-tooth portion of the common electrode, the two parallel portions are each positioned outside the outermost comb-tooth portions of the pixel electrode, and (W - S) / (L + S) satisfies "2n + 1", in which "W" represents a distance between the two parallel portions, "L" represents the width of each of the comb-tooth portions of the pixel electrode and the common electrode, "S" represents a distance between a comb-tooth portion of the pixel electrode and an adjacent comb-tooth portion of the common electrode and also represents a distance between one of the outermost comb-tooth portions of the pixel electrode and one of the two parallel portions, and "n" represents the number of the comb-tooth portions of the common electrode.

The liquid crystal display device of the present invention comprises a first substrate, a second substrate positioned to face the first substrate, and a liquid crystal layer interposed between the first substrate and the second substrate. The liquid crystal layer is filled with liquid crystal molecules of which alignment is controlled by certain voltage application. Wirings, electrodes, semiconductor elements and the like provided on the first and/or second substrates enable voltage application to the liquid crystal layer so that the alignment of liquid crystal molecules is controlled.

The liquid crystal layer contains liquid crystal molecules having positive dielectric anisotropy. Therefore, voltage application to the liquid crystal layer aligns the liquid crystal molecules along the direction of the electric field. As a result, the liquid crystal molecules are aligned in a favorable shape, for example, in an arch shape.

The liquid crystal molecules are aligned in the direction vertical to the surface of the first substrate when voltage is not applied. The initial alignment of the liquid crystal molecules set in this manner efficiently shields light during black display. An exemplary method for vertically aligning the liquid crystal molecules when voltage is not applied includes providing vertical alignment films on the surfaces of the first and/or second substrates contacting the liquid crystal layer.

According to the liquid crystal display device of the present invention, since the liquid crystal molecules are vertically aligned when voltage is not applied, high-contrast display is achieved. Moreover, since the liquid crystal molecules are aligned in a bend alignment when voltage is applied, an excellent view angle is realized.

The first substrate comprises a pixel electrode and a common electrode, each comprising a core portion and a comb-tooth portion. The comb-tooth portions of the pixel electrode and of the common electrode are arranged in parallel with each other and alternately engaged at a constant interval. In the present invention, the pixel electrode is an electrode subjected to signal voltage application and the common electrode is an electrode subjected to common voltage application. Comb-tooth portions respectively formed in the pixel electrode and the common electrode allow efficient generation of a desired electric field (e.g. transverse electric field) in the liquid crystal layer. Additionally, arrangement of their comb-tooth portions in parallel and alternately engaged with each other generates a uniform electric field, reducing non-uniform display.

The core portion of the common electrode has two parallel portions that are in parallel with the longitudinal direction of the comb-tooth portion of the common electrode, and the two parallel portions are each positioned outside the outermost comb-tooth portions of the pixel electrode. The common electrode in the present invention has a core portion, in addition to the comb-tooth portion, as a constitutional element. The core portion of the common electrode serves as a core part from which the comb-tooth portion protrudes, and also serves as a member surrounding the comb-tooth portion of the pixel electrode. The display mode of the present invention is a mode in which a transverse electric field is generated basically between the comb-tooth portion of the pixel electrode and the comb-tooth portion of the common electrode. When the core portion of the common electrode is further elongated in parallel with the comb-tooth portion of the pixel electrode, a desired electric field (e.g. transverse electric field) can also be generated between the comb-tooth portion of the pixel electrode and the core portion of the common electrode so that the region becomes an active region in the picture element.

(W - S) / (L + S) satisfies "2n + 1", in which "W" represents a distance between the two parallel portions, "L" represents the width of each of the comb-tooth portions of the pixel electrode and the common electrode, "S" represents a distance between a comb-tooth portion of the pixel electrode and an adjacent comb-tooth portion of the common electrode and also represents a distance between one of the outermost comb-tooth portions of the pixel electrode and one of the two parallel portions, and "n" represents the number of the comb-tooth portions of the common electrode. Namely, it is not the only effect provided by the two parallel portions of the common electrode to make the region therebetween an active region. Moreover, the two parallel portions define the width of the picture element region. In accordance with that width, the width of each comb-tooth portion of the pixel electrode and of the common electrode is made uniform and the distances between the adjacent comb-tooth portions of the pixel electrode and of the common electrode are made uniform. Furthermore, the distance between one of the outermost comb-tooth portions of the pixel electrode and the core portion of the common electrode is set to be the same as the distance between the comb-tooth portion of the pixel electrode and the adjacent comb-tooth portion of the common electrode. In that case, patterning that satisfies the above relation allows generation of the most uniform electric field (e.g. transverse electric field). As a result, it is possible to achieve the properties that enable uniform display in the picture element seen from any positions or at any angles.

The configuration of the liquid crystal display device of the present invention is not especially limited as long as it essentially includes such components. The liquid crystal display device may or may not include other components.

In the liquid crystal display device of the present invention, the two parallel portions of the core portion of the common electrode are two portions specified to determine the area of the picture element. The number of the parallel portions is not limited to two and may be three or more, in the whole liquid crystal display device. Moreover, the two parallel portions of the core portion of the common electrode may be connected to each other to form one electrode structure, when seen as a whole.

The relation specified in the present invention is expressed in a formula (W - S)/ (L + S) = 2n + 1 in which "n" is a natural number. Between the left side and the right side of the formula, the figures after the decimal point may be rounded off as a calculation error. Such a calculation error hardly adversely affects the display performance and may be ignored.

Here, "L" and "S" are determined in correspondence to "W". Therefore, "L" and "S" are not limited with regard to the part where "W" is not satisfied.

"L" is preferably 1 µm or more, and more preferably 2 µm or more. This enhances the response speed and reduces the possibility of wire breakage. "S" is preferably 1 µm or more, and more preferably 2 µm or more. This enhances the transmissivity and reduces the possibility of short circuit. More preferable embodiment is an embodiment in which "L" is 2 µm or more and "S" is 2 µm or more. Such an embodiment realizes most well-balanced display.

### EFFECT OF THE INVENTION

According to the liquid crystal display device of the present invention, it is possible to suppress non-uniform display in a liquid crystal display device which generates an electric field (e.g. transverse electric field) with use of a pair of electrodes in a liquid crystal layer containing nematic liquid crystals that are vertically aligned and have positive dielectric anisotropy.

### BRIEF DESCRIPTION OF DRAWINGS

[Fig. 1]

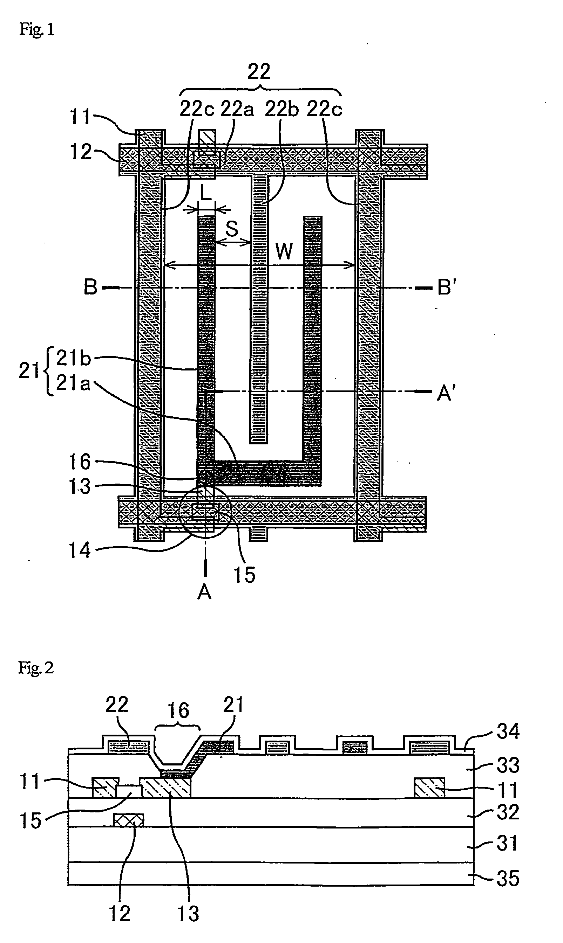

   Fig. 1 is a schematic plan view illustrating a picture element of a TFT substrate in a liquid crystal display device according to Embodiment 1.
[Fig. 2]
   Fig. 2 is a schematic cross-sectional view taken along A-A' line in Fig. 1.
[Fig. 3]

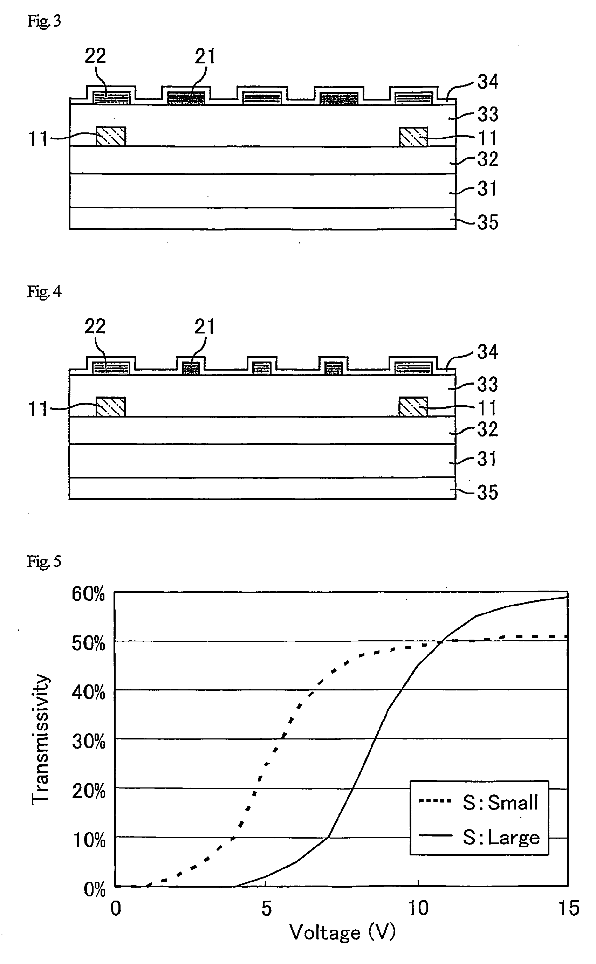

   Fig. 3 is a schematic cross-sectional view taken along B-B' line in Fig. 1 and shows an embodiment in which "L" is widened.
[Fig. 4]
   Fig. 4 is a schematic cross-sectional view taken along B-B' line in Fig. 1 and shows an embodiment in which "S" is widened.
[Fig. 5]
   Fig. 5 is a graph indicating a correlation between the applied voltage (V) corresponding to the value of "S" and the transmissivity (%).
[Fig. 6]

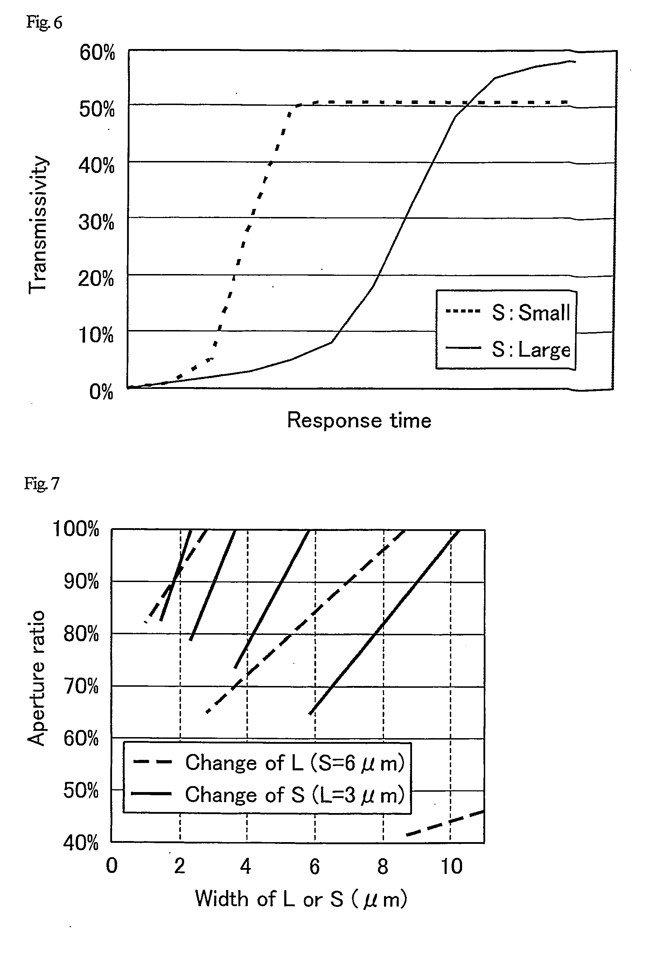

   Fig. 6 is a graph indicating a correlation between the response speed corresponding to the value of "S" and the transmissivity (%).
[Fig. 7]
   Fig. 7 is a graph indicating a relation between the value of "L" and the aperture ratio and a relation between the value "S" and the aperture ratio, when "W" is fixed to 50 µm in Embodiment 1.
[Fig. 8]

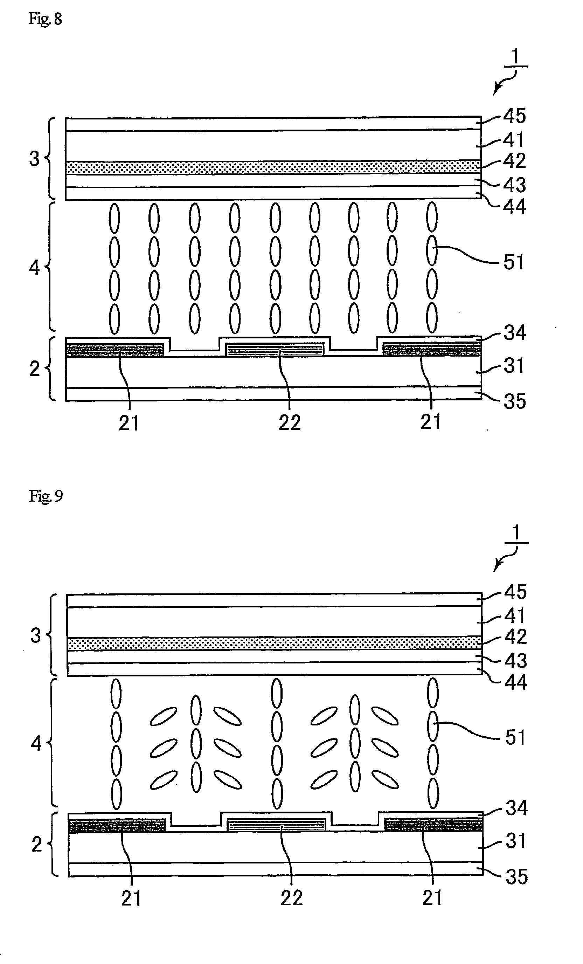

   Fig. 8 is a schematic cross-sectional view illustrating an entire configuration of a liquid crystal display panel in a liquid crystal display device of Embodiment 1 and shows a state where voltage is not applied to a liquid crystal layer.
[Fig. 9]
   Fig. 9 is a schematic cross-sectional view illustrating an entire configuration of the liquid crystal display panel in the liquid crystal display device of Embodiment 1 and shows a state where voltage not smaller than the threshold voltage is applied to the liquid crystal layer.
[Fig. 10]

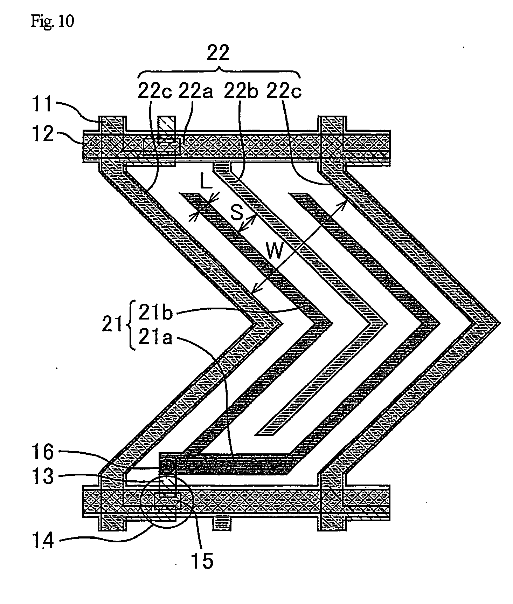

   Fig. 10 is a schematic plan view illustrating a picture element of a TFT substrate in a liquid crystal display device according to Embodiment 2.
[Fig. 11]
   Fig. 11 is a schematic plan view illustrating a picture element in a liquid crystal display device in which intervals between comb-tooth portions of a pair of electrodes are different from one region to the next.
[Fig. 12]
   Fig. 12 is a schematic cross-sectional view illustrating a configuration of a liquid crystal display device according to Embodiment 3.

### MODES FOR CARRYING OUT THE INVENTION

### Embodiment 1

A liquid crystal display device of Embodiment 1 is of a type in which a pair of electrodes formed on the same substrate generates an arch-shaped transverse electric field in a liquid crystal layer to control the alignment of liquid crystal molecules, which are initially vertically aligned, so that image display are controlled.

In the liquid crystal display device of Embodiment 1, a plurality of pixels each constituted by a plurality of picture elements (sub pixels) are formed in a matrix. The liquid crystal display device of Embodiment 1 has a pair of substrates and a liquid crystal layer interposed between the substrates. More specifically, the liquid crystal display device of Embodiment 1 has a TFT substrate, a liquid crystal layer, and a counter substrate positioned in this order from the back screen side toward the screen side. The liquid crystal layer contains nematic liquid crystals having positive dielectric anisotropy (Δε > 0).

Fig. 1 is a schematic plan view illustrating a picture element of a TFT substrate in a liquid crystal display device according to Embodiment 1. As illustrated in Fig. 1, the TFT substrate has source wirings (signal electrode lines) 11 for transmitting image signals, gate wirings (scanning signal lines) 12 for transmitting scanning signals, and a thin film transistor (TFT) 14 that is a switching element and is provided in each picture element (one in a single picture element). The TFT 14 is provided around the intersection of the source wiring 11 and gate wiring 12. Each TFT has a source electrode 11 connected to the source wiring 11, a gate electrode 12 connected to the gate wiring 13, and a drain electrode 13 connected to the source electrode 11 via a semiconductor layer 15. Moreover, the TFT substrate has a pixel electrode 21 and a common electrode 22 for applying certain voltage to the liquid crystal layer.

The source wirings 11 are linearly provided in parallel with each other. The gate wirings 12 are also linearly provided in parallel with each other. The source wirings 11 and the gate wirings 12 are provided orthogonally to each other.

The source wirings 11 are connected to a source driver. The source driver supplies source voltage (signal voltage) that is to be an image signal. The source voltage is applied to the TFT 14. The gate wirings 12 are connected to a gate driver. The gate driver supplies a gate voltage that is to be a scanning signal, at predetermined timings in a pulsed manner. The gate voltage is line sequentially applied to the TFT 14.

A drain lead-out wiring 13 is routed from the drain electrode 13 of the TFT 14. The drain lead-out wiring 13 and the pixel electrode 21 are in different layers via an insulating film and are mutually connected via a contact portion 16 provided in the insulating film. This configuration connects the TFT 14 to the pixel electrode 21 via the drain lead-out wiring 13 and the contact portion 16. Accordingly, a signal voltage supplied from the source wirings 11 is applied to the pixel electrode 21 at a predetermined timing via the TFT 14 in which the mode is shifted to an ON mode only for a certain time period by the scanning signal inputted thereto.

The common electrode 22 is positioned in a layer different from the layer where the source wirings 11 and the gate wirings 12 are running, and an insulating film are interposed between the two layers. Moreover, the common electrode 22 is superimposed over the source wirings 11 and the gate wiring 12. Common voltage maintained at a certain voltage is applied to the common electrode 22.

The pixel electrode 21 has a core portion 21a having a comparatively large width and a plurality of comb-tooth portions 21b that are protruded from a part of the core portion 21a and has a comparatively small width. In the common electrode 22, a region superimposed over the source wirings 11 and the gate wirings 12 is the core portion 22a having a comparatively large width, and a comb-tooth portion 22b is provided which is routed from a part of the core portion 22a and has a comparatively small width. The core portion 22a of the common electrode has a matrix shape corresponding to the combined shape of the source wirings 11 and the gate wirings 12, as a whole.

The comb-tooth portions 21b of the pixel electrode 21 and the comb-tooth portion 22b of the common electrode 22 are linearly provided in parallel with each other. The comb-tooth portions 21b of the pixel electrode 21 and the comb-tooth portion 22b of the common electrode 22 are alternately engaged with each other at constant intervals.

Moreover, the comb-tooth portion 21b of the pixel electrode 21 and the comb-tooth portion 22b of the common electrode 22 are provided also in parallel with the source wirings 11. Accordingly, the comb-tooth portion 21b of the pixel electrode 21 is also in parallel with a section of the core portion 22a of the common electrode 22 which is superimposed over the source wirings 11.

According to the liquid crystal display device of Embodiment 1, a transverse electric field generated between the comb-tooth portion of the pixel electrode and the comb-tooth portion of the common electrode controls the alignment of liquid crystal molecules. Moreover, the alignment of the liquid crystal molecules is also controlled by a transverse electric field generated between the comb-tooth portion of the pixel electrode and a section of the core portion of the common electrode which is in parallel with the comb-tooth portions of the pixel electrode.

Accordingly, in the liquid crystal display device of Embodiment 1, a single picture element is defined by the region surrounded by the common electrode 22 and is controlled by a single TFT 14. The aperture width of the picture element is determined by a distance between the two core portions, among core portions 22a, of the common electrode 22 which are in parallel with the comb-tooth portion of the pixel electrode.

In Embodiment 1, the width L of the comb-tooth portion 21b of the pixel electrode 21 and the width L of the comb-tooth portion 22b of the common electrode 22 are set to be substantially equal to each other. Moreover, the distances (intervals) S between the comb-tooth portion 21b of the pixel electrode 21 and the adjacent comb-tooth portion 22b of the common electrode 22 are set to be substantially constant. Further, the distance S between the comb-tooth portion 21b of the pixel electrode 21 and a portion 22c of the core portion 22a of the common electrode which is in parallel with the comb-tooth portion 21b of the pixel electrode 21 is set to be substantially the same as the distance S between the comb-tooth portion 21b of the pixel electrode 21 and the adjacent comb-tooth portion 22b of the common electrode 22. The distance between the portions 22c of the core portion 22a of the common electrode 22, which are in parallel with the comb-tooth portion 21b of the pixel electrode 21, is the aperture width of the picture element.

In the liquid crystal display device of Embodiment 1, when the number of the comb-tooth portions 22b of the common electrode 22 is "n", (W - S) / (L + S) defined by the above "L", "S", and "W" satisfies "2n + 1".

This relation is deduced from the following procedure. As illustrated in Fig. 1, the aperture width of a picture element in Embodiment 1 is defined by a distance W between the portions 22c of the core portions 22a of the common electrode 22, which are in parallel with the comb-tooth portion 21b of the pixel electrode 21. Here, in Embodiment 1, the width of the comb-tooth portion 21b of the pixel electrode 21 is "L". The width of the comb-tooth portion 22b of the common electrode 22 is "L". The distance between the comb-tooth portion 21b of the pixel electrode 21 and the adjacent comb-tooth portion 22b of the common electrode 22 is "S". The distance between the comb-tooth portion 21b of the pixel electrode 21 and the portion 22c of the core portion 22a of the common electrode 22 which is in parallel with the comb-tooth portion 21b of the pixel electrode 21 is "S". When the number of the comb-tooth portions 22b of the common electrode 22 is "n", an equation W = L·n + L·(n+1)+S·(2n+1)+S+D is derived. Since "n" is a natural number, a remainder D is left. Then, the aperture ratio is represented by (W - D) / W. Since the most preferable aperture ratio is 1, the optimal condition is D=0. The above equation is calculated by assigning "0" to "D". Then, the developed equation is W=L·n+L·n+L+2S·n+S+S. Further that equation is developed to W = L(2n + 1) + S (2n + 1) + S. Finally, (W - A)/ (L + S) = 2n + 1 is deduced therefrom.

When such conditions are satisfied, the transverse electric field generated in the picture element has uniformity. Accordingly, non-uniform display is efficiently suppressed and high aperture ratio is achieved.

Fig. 2 is a schematic cross-sectional view taken along A-A' line in Fig. 1. As illustrated in Fig. 2, the TFT substrate in Embodiment 1 has a gate electrode (gate wiring) 12 on the liquid crystal layer-side surface of an insulating substrate 31, and further has a semiconductor layer 15, a source electrode (source wiring) 11, and a drain electrode (drain lead-out wiring) 13 on a gate insulating film 32 formed on the gate electrode 12 and the insulating substrate 31. The source electrode (source wiring) 11 is connected to the drain electrode (drain lead-out wiring) 13 via the semiconductor layer 15. Here, a combination of the gate electrode 12, the semiconductor layer 15, the source electrode 11, and the drain electrode 13 constitute a single TFT 14.

Figs. 3 and 4 are schematic cross-sectional views each taken along B-B' line in Fig. 1. Fig. 3 shows an embodiment in which the "L" is widened. Fig. 4 shows an embodiment in which the "S" is widened. As long as the relation (W - S)/ (L + S) = 2n + 1 is satisfied in Embodiment 1, the widths of "L" and "S" may be changed. The smaller the "L" is, the more the response speed is enhanced. However, the possibility of wire breakage is increased at the same time. Therefore, the "L" is preferably 2 µm or more. Moreover, the larger the "S" is, the more the transmissivity is increased. In addition, the possibility of short circuit is decreased at the same time. Specifically, the "S" is preferably 2 µm or more.

Fig. 5 is a graph indicating a correlation between the applied voltage (V) corresponding to the value of "S" and the transmissivity (%). The dotted line shows a correlation when the "S" value is small. The solid line shows a correlation when the "S" value is large. As illustrated in Fig. 5, though a larger "S" contributes to increase in the maximum transmissivity, the applied voltage is also increased for achieving sufficient transmissivity.

Fig. 6 is a graph indicating a correlation between the response speed corresponding to the value of "S" and the transmissivity (%). The dotted line shows a correlation when the "S" value is small. The solid line shows a correlation when the "S" value is large. As illustrated in Fig. 6, though a larger "S" contributes to increase in the maximum transmissivity, a response time is also increased for achieving sufficient transmissivity.

Here, when the comb-tooth-portion width "L" or comb-tooth-portion interval "S" is not constant in a single picture element, the response speed of liquid crystal molecules is fast in a part where "L" is larger, namely, where "S" is small, and the response speed is slow in a part where "L" is smaller, namely, where "S" is larger. When the area of the part where "S" is large occupies the major part of the entire picture element, the response speed is slow as the whole picture element. The effect of the invention is not achieved until the "L"s and "S"s are respectively set to be constant in a single picture element and the parameters of the constant "L"s and "S"s are respectively determined in correspondence with the aperture width "W" of a single picture element. Accordingly, the present invention is not based on the simple idea of widening or narrowing the widths of "L" and "S".

Fig. 7 is a graph indicating a relation between the value "L" and the aperture ratio and a relation between the value "S" and the aperture ratio, when "W" is fixed to 50 µm in Embodiment 1. In Fig. 7, the solid line indicates a relation when "L" is fixed to 3 µm and the dotted line indicates a relation when "S" is fixed to 6 µm.

### (Example 1)

When "W" was 50 µm, "S" was 10.25 µm, and "n" was a natural number, examples of "L" calculated using the above equation included 3 µm (n = 1, in this case). This value was consistent with a point which allows a high aperture ratio in Fig. 7.

### (Example 2)

When "W" was 50 µm, "S" was 6 µm, and "n" was a natural number, examples of "L" calculated using the above equation included 2.8 µm (n = 2, in this case). This value was consistent with a point which allows a high aperture ratio in Fig. 7.

### (Comparative Example 1)

In contrast, when "W" was 50 µm, "S" was 6 µm, and "n" was a natural number, examples of "L" not satisfying the above equation included 3 µm (n = 2, in this case). This value was consistent with a point which results in a low aperture ratio in Fig. 7.

Table 1 shows the above results.

**[Table 1]**

| | L (µm) | S (µm) | n | Aperture ratio (%) |
|---|---|---|---|---|
| Example 1 | 3 | 10.25 | 1 | 100 |
| Example 2 | 2.8 | 6 | 2 | 100 |
| Comparative Example 1 | 3 | 6 | 2 | 66 |

In the following, members illustrated in Figs. 3 and 4 are more specifically described. Materials of the insulating substrate 31 may be light-transmissive materials such as glass and plastics. Materials of the gate insulating film 32 may be transparent insulating materials such as silicon oxide and silicon nitride.

Materials of the source electrode (Source wiring) 11, the gate electrode (gate wiring) 12, and the drain electrode (drain lead-out wiring) 13 may be metals such as aluminum, tantalum, and molybdenum. Since the source electrode (Source wiring) 11 and the drain electrode (drain lead-out wiring) 13 are provided in the same layer, the production process can be simplified by using the same material for these.

An interlayer insulating film 33 is formed on the liquid crystal layer-side surfaces of the source electrode (source wirings) 11 and the drain electrode (drain lead-out wiring) 13. The drain electrode (drain lead-out wiring) 13 is connected with the pixel electrode 21 via the contact portion 16 provided in the interlayer insulating film 33.

Materials of the interlayer insulating film 33 may be either inorganic or organic. Further, the interlayer insulating film 33 may have a plurality of layers made of different materials. The plurality of layers may be a stack of inorganic insulating layers and organic insulating layers.

The pixel electrode 21 and the common electrode 22 are positioned in the same layer. This allows generation of a transverse electric field at a high density between the pixel electrode 21 and the common electrode 22. This allows highly-precise control of the liquid crystal molecules in the liquid crystal layer.

Exemplary materials of the pixel electrode 21 and the common electrode 22 include metal oxides such as ITO (Indium Tin Oxide) and IZO (Indium Zinc Oxide), and metals such as aluminum and chromium. Since the pixel electrode 21 and the common electrode 22 are positioned in the same layer, the production process may be simplified by using the same material for these. Use of a transparent electrode made of the above metal oxides and the like is preferable from the standpoint of increasing the transmissivity.

On the liquid crystal layer-side surfaces of the pixel electrode 21 and the common electrode 22, a vertical alignment film 34 covering these electrodes are provided. The vertical alignment film 34 allows the initial tilt of liquid crystal molecules to be vertical (90 ± 0-4°) to the TFT substrate surface, leading to the vertical alignment when voltage is not applied. Materials of the vertical alignment film 34 may be resins such as polyimide.

Figs. 8 and 9 are schematic cross-sectional views each illustrating an entire configuration of the liquid crystal display panel in a liquid crystal display device of Embodiment 1. Fig. 8 shows a state where voltage is not applied to a liquid crystal layer and Fig. 9 shows a state where voltage not smaller than the threshold voltage is applied to a liquid crystal layer. As illustrated in Figs. 8 and 9, the liquid crystal display panel 1 has a TFT substrate (first substrate) 2, a counter substrate (second substrate) 3 positioned to face the TFT substrate 2, and a liquid crystal layer 4 interposed therebetween. In addition to such a liquid crystal display panel 1, the liquid crystal display device of Embodiment 1 further has a backlight unit (not illustrated) provided on the back side of the liquid crystal display panel 1.

As illustrated in Fig. 8, liquid crystal molecules 51 in the liquid crystal layer 4 are aligned in homeotropic alignment, namely, aligned in a direction vertical to the substrate surface, when voltage is not applied. More specifically, the longitudinal direction of each of the stick-shaped liquid crystal molecules 51 is vertical to the substrate surface and all the liquid crystal molecules 51 are aligned in the same direction.

As illustrated in Fig. 9, when the voltage is applied between the pixel electrode 21 and the counter electrode 22, the alignment of the liquid crystal molecules 51 is changed along with the arch-shaped transverse electric field generated between these electrodes. The liquid crystal molecules 51 influenced by the electric field as above are aligned symmetric with respect to the intermediate range between the pixel electrode 21 and the counter electrode 22, namely, aligned in a bend alignment. Here, as seen in Fig. 9, since the liquid crystal molecules 51 positioned right over the pixel electrode 21 and the counter electrode 22 are less likely to be influenced by the change of the electric field, their vertical alignment is maintained. In addition, also with regard to the liquid crystal molecules 51 positioned in the intermediate area between the electrodes, which is the most distant from each electrode, the vertical alignment is maintained.

The counter substrate 3 facing the TFT substrate 2 with the liquid crystal layer 4 interposed therebetween has an organic resin layer 42 including color filter (CF) layers each overlapping with the range of each picture element defined by the TFT substrate and a black matrix (BM) layer shielding light between each adjacent CFs. On the surface of the organic resin layer 42 on the liquid crystal layer 4 side, an overcoat layer 43 for flattening the surface of the counter substrate 3 is provided. This suppresses generation of alignment disorders of the liquid crystal molecules. On the surface of the overcoat layer 43 on the liquid crystal layer 4 side, an vertical alignment film 44 similar to that of the TFT substrate 2 is provided.

The BM layer is formed to be superimposed over the periphery of picture elements, namely, formed to be superimposed over the source wirings 11, gate wirings 12, and the common electrode 22. The CF layer is used to conduct color display and is made of transparent organic resins, such as acrylic resins, containing pigments. The CF layer is formed in correspondence with each picture element, namely, formed to be superimposed over the area surrounded by the common electrode 22.

Materials of the insulating substrate 41 may be light-transmissive insulating materials such as glass and plastics. Materials of the BM layer may be light-shielding metals such as Chromium (Cr) and light-shielding organic films such as acrylic resins containing carbons.

As above, the liquid crystal display device of Embodiment 1 is a color liquid crystal display device including a CF layer in the counter substrate 3. In the liquid crystal display device, three picture elements (sub pixels) outputting a colored light of red (R), green (G), blue (B), and the like constitute a single pixel. In Embodiment 1, the kind or the number of colors outputted by picture elements is not particularly limited and may be set as appropriate. Each pixel may be constituted by three picture elements of, for example, cyan (C), magenta (M), and yellow (Y). Or alternatively, each pixel may be constituted by four picture elements.

The TFT substrate 2 and the counter substrate 3 are bonded to each other by a sealing agent applied along the periphery of the display region via a spacer such as plastic beads.

A polarizer 35 is attached to the surface of the insulating substrate 31 in the TFT substrate 2 on the opposite side of the liquid crystal layer 4 side. A polarizer 45 is attached to the surface of the insulating substrate 41 in the counter substrate 3 on the opposite side of the liquid crystal layer 4 side. The transmission axes of these polarizers 35 and 45 are orthogonal to each other (crossed nicols state). In addition, the transmission axes of these polarizers 35 and 45 are respectively arranged to form angles of 45°with the longitudinal directions of the comb-tooth portion 21b of the pixel electrode 21 and the comb-tooth portion 22b of the common electrode 22. Here, in the liquid crystal display device of Embodiment 1, optical films such as a retardation film and a viewing angle compensating film may be provided, in addition to the polarizers 35 and 45.

### Embodiment 2

Fig. 10 is a schematic plan view illustrating a picture element of a TFT substrate in a liquid crystal display device according to Embodiment 2. A liquid crystal display device of Embodiment 2 is different from the liquid crystal display device of Embodiment 1 in that the source wirings 11, the comb-tooth portion 21b of the pixel electrode 21, and the comb-tooth portion 22b and a part of the core portion 22a of the common electrode 22 are each not linearly formed but formed in the shape of V rotated to the right by 45° in each picture element. Except for this point, the liquid crystal display device of Embodiment 2 is similar to the liquid crystal display device of Embodiment 1. Each of the source wirings 11 and a part of the core portion 22a of the common electrode 22, namely, the core portions 22c of the common electrode 22 which are in parallel with the longitudinal direction of the comb-tooth portion 21b of the pixel electrode 21, are formed across a plurality of picture elements and they each have a zigzag shape as a whole. In Embodiment 2, a pair of polarizers are arranged so that the direction of the polarizing axes satisfy the same relation as that in Embodiment 1. Namely, the polarizers are arranged in parallel with or orthogonal to the running direction of the gate wirings 12.

The part formed in the shape of V rotated to the right by 45° is provided on both sides of the picture element starting from the longitudinal bisector of the picture element. Additionally, in the part formed in the shape of V rotated to the right by 45°, comb-tooth portions are symmetric to each other with respect to the longitudinal bisector of the picture element. Such a configuration aligns liquid crystal molecules oblique to the outer frame of the picture element and allows the alignment that is equal in the area in respective directions. This further improves the viewing angle.

Also in Embodiment 2, the width of the comb-tooth portion 21b of the pixel electrode 21 is "L". The width of the comb-tooth portion 22b of the common electrode 22 is "L". The distance between the comb-tooth portion 21b of the pixel electrode 21 and the adjacent comb-tooth portion 22b of the common electrode 22 is "S". The distance between the comb-tooth portion 21b of the pixel electrode 21 and the portion 22c of the core portion 22a of the common electrode 22 which is in parallel with the comb-tooth portion 21b of the pixel electrode 21 is "S". The distance between the portions 22c of the core portion 22a of the common electrode 22 which are in parallel with the comb-tooth portion 21b of the pixel electrode 21, namely, the aperture width of the picture element, is "W". The number of the comb-tooth portions 22b of the common electrode 22 is "n". In such a condition, (W - S) / (L + S) satisfies "2n + 1".

Accordingly, in the liquid crystal display device of Embodiment 2, the transverse electric field generated in the picture element has uniformity to efficiently suppress generation of non-uniform display and high aperture ratio is achieved.

### Embodiment 3

Fig. 12 is a schematic cross-sectional view illustrating a configuration of a liquid crystal display device of Embodiment 3. As illustrated in Fig. 12, a liquid crystal display device of Embodiment 3 comprises a liquid crystal display panel having a pair of substrates 2 and 3 and a liquid crystal layer 4 interposed between the substrates 2 and 3. One of the pair of substrates is a TFT substrate 2 and the other is a counter substrate 3. The liquid crystal display device of Embodiment 3 is different from those of Embodiments 1 and 2 in the following point. The liquid crystal display device of the present embodiment has a counter electrode 61 on the counter substrate 3 side. As illustrated in Fig. 12, the counter substrate 3 has an insulating substrate 41. On the main surface of the insulating substrate 41 on the liquid crystal layer 4 side, a counter electrode 61, a dielectric layer (insulating layer) 62, and a vertical alignment film 44 are stacked in this order. Here, between the counter electrode 61 and the insulating substrate 41, organic resin layers such as a color filter layer and a black matrix layer may be formed.

The counter electrode 61 is formed of a transparent conductive film such as ITO and IZO. The counter electrode 61 and the dielectric layer 62 are continuously formed to cover at least the whole display area. A predetermined electric potential that is a common potential for all the picture elements is applied to the counter electrode 61.

The dielectric layer 62 is formed of transparent insulating materials. More specifically, the dielectric layer 62 is formed of an inorganic insulating film comprising silicon nitride and the like and an organic insulating film comprising acrylic resins and the like.

The TFT substrate 2 comprises an insulating substrate 31. In the TFT substrate 2, a pixel electrode 21, a common electrode 22, and a vertical alignment film 34 are provided in the same manner as in Embodiments 1 and 2. Moreover, on the outer main surfaces of the TFT substrate 2 and the counter substrate 3, polarizers 35 and 45 are provided.

Here, the applied voltage is different between the pixel electrode 21 and the common electrode 22 and also between the pixel electrode 21 and the counter electrode 61, except when black display is conducted. The common electrode 22 and the counter electrode 22 may be grounded. Moreover, the magnitude and the polarity of the applied voltage may be different or not different between the common electrode 22 and the counter electrode 61.

The liquid crystal display device of the present embodiment may also suppress non-uniform display in the same manner as in Embodiment 1. Moreover, formation of the counter electrode 61 enhances the response speed.

The present application claims priority to Patent Application No. 2009-164984 filed in Japan on July 13, 2009 and Patent Application No. 2010-005110 filed in Japan on January 13, 2010 under the Paris Convention and provisions of national law in a designated State, the entire contents of which are hereby incorporated by reference.

### EXPLANATION OF NUMERALS AND SYMBOLS

- 1:: Liquid crystal display panel
- 2:: TFT substrate
- 3:: Counter substrate
- 4:: Liquid crystal layer
- 11:: Source wiring (Source electrode)
- 12:: Gate wiring (Gate electrode)
- 13:: Drain lead-out wiring (Drain electrode)
- 14:: TFT
- 15:: Semiconductor layer
- 16:: Contact portion
- 21:: Pixel electrode
- 21a:: Pixel electrode (Core portion)
- 21b:: Pixel electrode (Comb-tooth portion)
- 22:: Common electrode
- 22a:: Common electrode (Core portion)
- 22b:: Common electrode (Comb-tooth portion)
- 22c:: Common electrode (Portion that is in parallel with the longitudinal direction of the comb-tooth portion of the pixel electrode)
- 31, 41:: Insulating substrate
- 32:: Gate insulating film
- 33:: Interlayer insulating film
- 34, 44:: Vertical alignment film
- 35, 45:: Polarizer
- 42:: Organic resin layer
- 43:: Overcoat layer
- 51:: Liquid crystal molecule
- 61:: Counter electrode
- 62:: Dielectric layer

## Claims

1. A liquid crystal display device comprising:
a first substrate and a second substrate positioned to face the first substrate; and
a liquid crystal layer interposed between the first substrate and the second substrate,
wherein the liquid crystal layer contains liquid crystal molecules having positive dielectric anisotropy,
the liquid crystal molecule is aligned in a direction vertical to a surface of the first substrate when voltage is not applied,
the first substrate comprises a pixel electrode and a common electrode, each comprising a core portion and a comb-tooth portion,
the comb-tooth portions of the pixel electrode and of the common electrode are arranged in parallel with each other and alternately engaged at a constant interval,
the core portion of the common electrode comprises two parallel portions that are in parallel with the longitudinal direction of the comb-tooth portion of the common electrode,
the two parallel portions are each positioned outside the outermost comb-tooth portions of the pixel electrode, and (W - S) / (L + S) satisfies "2n + 1", in which "W" represents a distance between the two parallel portions, "L" represents the width of each of the comb-tooth portions of the pixel electrode and the common electrode, "S" represents a distance between a comb-tooth portion of the pixel electrode and an adjacent comb-tooth portion of the common electrode and also represents a distance between one of the outermost comb-tooth portions of the pixel electrode and one of the two parallel portions, and "n" represents the number of the comb-tooth portions of the common electrode.

2. The liquid crystal display device according to claim 1,
wherein "L" is 2 µm or longer.

3. The liquid crystal display device according to claim 1 or 2,
wherein "S" is 2 µm or longer.
